**Europäisches Patentamt**

**European Patent Office**

**Office européen des brevets**

(19)

(11) **EP 0 860 522 B1**

(12) **EUROPÄISCHE PATENTSCHRIFT**

(45) Veröffentlichungstag und Bekanntmachung des Hinweises auf die Patenterteilung:
**09.06.2004 Patentblatt 2004/24**

(51) Int Cl.[7]: **D01F 2/00**, C08L 1/02, C08L 1/00, C08L 3/00, C08L 5/00, C08B 1/00

(21) Anmeldenummer: **97102615.8**

(22) Anmeldetag: **19.02.1997**

(54) **Verfahren zur Herstellung von Formkörpern aus Polysaccharidmischungen**

Process for producing moulded articles from polysaccharide mixtures

Procédé de fabrication d'articles moulés à base de mélanges de polysaccharides

(84) Benannte Vertragsstaaten:
**AT FR GB IT**

(43) Veröffentlichungstag der Anmeldung:
**26.08.1998 Patentblatt 1998/35**

(73) Patentinhaber: **THÜRINGISCHES INSTITUT FÜR TEXTIL- UND KUNSTSTOFF-FORSCHUNG e.V.
07407 Rudolstadt-Schwarza (DE)**

(72) Erfinder:
- **Meister, Frank, Dr.
  06132 Halle/Saale (DE)**
- **Taeger, Eberhard, Dr.
  07407 Weissbach (DE)**
- **Maron, Reinhard, Dr.
  07407 Rudolstadt (DE)**

- **Berghof, Klaus, Dipl.-Chem.
  07407 Rudolstadt (DE)**

(74) Vertreter: **Brandenburg, Thomas, Dr.
Brandenburg, Dunkelberg & Franke
Lindenstrasse 1
53773 Hennef (DE)**

(56) Entgegenhaltungen:
EP-A- 0 574 870          WO-A-96/14451
DD-B- 298 789            DE-A- 1 694 047
DE-A- 1 694 048          DE-A- 2 830 684
DE-A- 2 913 589          DE-A- 4 439 149

Bemerkungen:
Die Akte enthält technische Angaben, die nach dem Eingang der Anmeldung eingereicht wurden und die nicht in dieser Patentschrift enthalten sind.

EP 0 860 522 B1

**Beschreibung**

Die Erfindung betrifft ein Verfahren zur Herstellung von Formkörpern aus Polysaccharidmischungen durch Auflösen von Cellulose und eines Zweitpolysaccharids in einem organischen, mit Wasser mischbaren Polysaccharidlösungsmittel, das auch ein inertes Zweitlösungsmittel enthalten kann, Verformen der Lösung unter Druck durch eine Düse zu den Formkörpern und Verfestigung der Formkörper durch Koagulation in einem Fällbad. Die Erfindung betrifft auch den nach diesem Verfahren hergestellten Formkörper und die Verwendung des Formkörpers.

Es ist bereits bekannt, daß chemisch nicht veränderte Polysaccharide auf Grund der starken Wasserstoffbrückenbindungen im Molekül einer Verformung ausschließlich über derivatisierende Löseprozesse, die zur Bildung instabiler löslicher Polysaccharidderivate (z. B. Cellulosexanthogenat) führen, oder nach DE-A-2905424 bzw. DE-A-4219658 über nichtderivatisierende, rein physikalische Löseprozesse zugänglich sind.

Es ist weiterhin bekannt, Polysaccharidmischungen prinzipiell auf folgendem Weg herzustellen: Herstellen einer Lösung aus verschiedenen, meist wasserlöslichen Polysaccharid(derivat)en und Regenerieren der Mischung im Koagulationsbad bzw. anderweitiges Entfernen des eingesetzten Dispergiermediums (z.B. durch Gefriertrocknung). So lehrt die DE-A-2905424 zur Herstellung von stärkehaltigen Reyonfasern die konsekutive Auflösung von Stärke in wäßrig alkalischer Lauge, das Mischen dieser Lösung mit Viskoselösungen und das simultane Verformen zu Fasern und Regenerieren in sauren Lösungen. Nachteilig ist das enorme Umweltbelastungspotential bzw. die notwendigen hohen Kosten bei der Aufarbeitung des anfallenden Spinnbades sowie die Abnahme des Ausgangs-DP der Polysaccharide bei einer solchen Vorgehensweise.

Hydrophile Fäden oder Fasern bzw. Mischfasern mit hohem Flüssigkeitsrückhaltevermögen lassen sich nach DE-A-3001422 bzw. DE-A-3036415 durch Verformen von gepfropften Polysacchariden aus nichtwäßrigen, organischen Lösungen bzw. einer Mischung aus anionisch modifizierter Cellulose und Viskoselösungen herstellen. Um also derartige Fäden bzw. Fasern herstellen zu können, ist die vorgelagerte Derivatisierung der Cellulose zwingend notwendig. Polymerkomposite nach DE-A-4016328 bedienen sich bei der Herstellung ebenfalls der Mischung von Zusätzen zu Viskoselösungen und zeigen die gleichen Nachteile wie die vorzitierten Lösungen.

Polysaccharidmembranen nach DE-A-4217745 und DE-A-4218568 sind ausschließlich auf Celluloseether niedriger Substitutionsgrade beschränkt. Die Umformung aus dem angegebenen Lösungsmittel/-gemisch führt zu einem verhältnismäßig starken DP-Abbau.

Formkörper nach DE-A-4244609 lassen sich nach dem beschriebenen Verfahren nur aus Cellulose und celluloseähnlichen, in Wasser unlöslichen Polysacchariden herstellen und benötigen zusätzliche Stabilisatoren zur Inhibierung des DP-Abbaus.

Polymerlösungen nach EP-A-0648808 enthalten neben Cellulose unter anderem Cellulosen mit niedrigen DP oder Polysaccharide, die bei Auflösung begrenzter Anteile (zwischen 5 und maximal 50% Zweitkomponente) in den beschriebenen Lösungsmittelmischungen das Spinnverhalten und die Spinnsicherheit ohne signifikante Änderung der textilphysikalischen Eigenschaften der resultierenden Formkörper (Fasern) positiv beeinflussen. Die angeführten synthetischen Polysaccharide aus β-1,3-Glucose und α-1,4-Glucose können demnach nicht zu Änderungen der Eigenschaften daraus hergestellter Formkörper dienen. Ihre Aufgabe beschränkt sich auf die Erhöhung von Spinngeschwindigkeit bzw. -sicherheit bei der Erspinnung von Filamenten.

Biomatrizes aus verschiedenen Polysaccharid(derivat)en lassen sich nach DE-A-3913402 und DE-A-4328329 herstellen. Grundlage ist das ausschließliche Arbeiten in Wasser. Cellulosische Materialien lassen sich dabei nur nach vorheriger Umwandlung in wasserlösliche Celluloseether verwenden. Ferner gelingt eine Fixierung der Mischungskomponenten in diesem Fall erst nach Gefriertrocknung, so daß eine Umformung völlig ausscheidet. Zur mechanischen Stabilisierung müssen diese Mischungen vor der Trocknung mit Spinnfasern stabilisiert werden.

Der vorliegenden Erfindung liegt die Aufgabe zugrunde, phasengekoppelte Formkörper aus Polysaccharidmischungen ohne die oben genannten Nachteile herzustellen. Ziel der Herstellung derartiger Formkörper ist die wirksame Kombination verschiedener Polysaccharideigenschaften, wie z. B. hohe Wasserbindung, Schwermetallbindung, bakterizide und fungizide Eigenschaften und abgestufte enzymatische Abbaubarkeit von nichtcellulosischen Polysacchariden, mit der formgebenden Stützfunktion der Cellulose bzw. wasserunlöslicher Cellulosederivate. Weitere Vorteile ergeben sich aus der folgenden Beschreibung.

Diese Aufgabe wird bei dem eingangs genannten Verfahren erfindungsgemäß dadurch gelöst, daß man zur Lösungsbildung Cellulose und/oder wenigstens ein wasserunlösliches Cellulosederivat und wenigstens ein von diesen durch Wasserlöslichkeit unterschiedenes Zweitpolysaccharid und/oder Zweitpolysaccharidderivat einsetzt, gemäß den Merkmalen des Anspruches 1.

Überraschenderweise wurde gefunden, daß durch die eintretende hohe Orientierung beim Verformen der Polysaccharidmischung unter Druck durch eine Düse und die anschließende Verfestigung durch Koagulation in einem Fällbad ein Grad der Wechselwirkung zwischen den unterschiedlichen Polymerkomponenten erreicht wird, der eine bei dieser Art Mischprozeß häufig auftretende Phasenentkopplung bei Fäll- bzw. Trockenprozessen verhindert, eine Kombination der verschiedenen Polysaccharideigenschaften zur Folge hat und die als Einzelphase wasserlöslichen Polysaccharidkomponenten nach der Verformung so in dem Cellulosemolekülverband verankert, daß sie nicht mehr mit Wasser extrahierbar sind.

Das Zweitpolysaccharid von erhöhter Wasserlöslichkeit ist aus Hexosen mit glycosidischer, 1,4- und 1,6-Verknüpfung aufgebaut. Zweitpolysaccharide dieser Art sind . Stärke (deren Amylopektinanteil D-Glucose in α-1,4- und α-1,6-Verknüpfung enthält), Pullulan (D-Glucose mit α-1,4-Verknüpfung im Maltotriosebaustein und α-1,6-Verknüpfung zwischen Grundbausteinen) sowie Carubin und Guaran (β-1,4-verknüpfte D-Mannose mit unterschiedlich häufig α-1,6-gebundener D-Galaktose).

Das Zweitpolysaccharid erhöhter Wasserlöslichkeit ist wenigstens teilweise aus Uronsäure(n) aufgebaut. Zweitpolysaccharide dieser Art sind Hyaluronsäure, Pektin, Algin, Carrageenan und Xanthan. Hyaluronsäure besteht aus dimeren β-1,3-verknüpften Grundbausteinen aus D-Glucuronsäure und 2-Acetamino-2-deoxyglucose, die β-1,4-glycosidisch miteinander verknüpft sind. Pektin enthält neben α-1,4-verknüpfter D-Galakturonsäure und -methylester hauptsächlich $C_2$- oder $C_3$-verknüpfte Galaktose bzw. Arabinoseseitenketten. Algin ist ein Copolymer aus α-1,4-verknüpfter L-Guluronsäure, β-1,4-verknüpfter D-Mannuronsäure und abwechselnd α-1,4- und β-1,4-verknüpften Grundbausteinen. Carrageenan und Xanthan bestehen aus β-1,4-verknüpfter D-Glucose mit trimeren Seitenketten aus 6-Actylmannose, D-Glucuronsäure und teilweise mit Brenztraubensäure acetalisierter Mannose.

Vorzugsweise setzt man zur Lösungsbildung ferner als Drittpolysaccharid wenigstens ein Polyglucosamin und/oder Polyglucosaminderivat ein. Das Polyglucosamin und/oder Polyglucosaminderivat kann in partiell abgebauter Form eingesetzt werden. Geeignete Polyglucosaminderivate sind die entsprechenden N-und/oder O-(Hydroxy- bzw. Carboxy-)alkyletherderivate von Chitin und/oder Chitosan.

Die Polysaccharidmischung kann 1 bis 99 Masse-% cellulosische Komponente(n) enthalten bezogen auf die Summe aller Polysaccharide und Polysaccharidderivate in der Lösung. Vorzugsweise liegt der Anteil der cellulosischen Komponente(n) in dem Bereich von 25 bis 75 Masse-%. Vorzugsweise setzt man als nicht-cellulosische Komponente(n) zu 1 bis 100 Masse-% Zweitpolysaccharid(derivat) und zu 99 bis 0 Masse-% Drittpolysaccharide ein. Für die Herstellung der Lösung ist die Reihenfolge der Zugabe der einzelnen Mischungskomponenten nicht festgelegt.

Als Zweitpolysaccharid können wasserlösliche Homopolysaccharide, die aus einheitlichen Grundeinheiten in unterschiedlicher Verknüpfungsmöglichkeit aufgebaut sind, sowie Heteropolysaccharide eingesetzt werden, die neben einheitlichen Kettengrundbausteinen unterschiedliche, bevorzugt als Seitenkette gebundene Bausteine besitzen. Beispiele für Homopolysaccharide sind die oben genannte Stärke, Pullulan und Hyaluronsäure. Beispiele für Heteropolysaccharide sind Pektin, Algin, Carrageenan, Xanthan, Carubin und Guaran.

Die Cellulosederivate haben einen durchschnittlichen Substitutionsgrad (DS = Zahl der substituierten Hydroxylgruppen der Anhydridoglucoseeinheit) zwischen 0,1 und 3,0. Vorzugsweise setzt man Cellulosederivate mit einem DS in dem Bereich von 0,5 bis 2,5 ein.

Die Zweitpolysaccharide haben einen durchschnittlichen Substitutionsgrad in dem Bereich von 0,5 bis 2,0.

Die Polyglucosaminderivate haben einen durchschnittlichen Substitutionsgrad in dem Bereich von 0,5 bis 1,0. Vorzugsweise liegt der DS in dem Bereich von 0,5 bis 0,8.

Nach der bevorzugten Ausführungsform des erfindungsgemäßen Verfahrens setzt man als Polysaccharidlösungsmittel ein N-Methylamin-N-oxid ein. Geeignete Aminoxide sind z.B. N-Methylmorpholin-N-oxid, N-Methylpiperidin-N-oxid, N-Methylhomopiperidin-N-oxid, N-Methylpyrrolidin-N-oxid, Di-N-Methycyclohexylamin-N-oxid und Dimethylbenzylamin-N-oxid. Unter diesen Verbindungen wird N-Methylmorpholin-N-oxid bevorzugt. Das Zweitlösungsmittel wird zweckmäßigerweise aus der aus Dimethylsulfoxid, N-Methylpyrrolidon und Sulfolan bestehenden Gruppe ausgewählt.

Vorzugsweise führt man eine Vorbehandlung eines oder mehrerer der eingesetzten Polysaccharide mit 0,1 bis 6,0 Masse-%, bezogen auf Polysaccharid, eines polysaccharidaktiven Enzyms in einem Flottenverhältnis in dem Bereich von 1:2 bis 1:20 bei einem pH-Wert zwischen 3 und 10 und bei einer Temperatur zwischen 20 und 70°C während 0,3 bis 3 Stunden durch. Durch diese Vorbehandlung einzelner oder aller im Gemisch vorhandener Polysaccharide kann eine deutliche Verkürzung der Lösungszeit und eine Verringerung der Lösetemperatur auf 80 bis 130°C, vorzugsweise auf 80 bis 110°C erreicht werden. Eine ähnliche Förderung der Auflösung der Polysaccharide kann durch deren hydrothermische Vorbehandlung in einem Flottenverhältnis in dem Bereich von 1:2 bis 1:20 bei einem pH-Wert zwischen 4 und 9 und bei einer Temperatur zwischen 90 und 180°C während 0,5 bis 5 Stunden erreicht werden.

Der Gesamtpolymergehalt der homogenen, zu verformenden Lösung kann in Abhängigkeit der Polymerisationgrade der einzelnen Polysaccharide und ihrer Mischungsanteile 5 bis 30 Masse-%, vorzugsweise 8 bis 15 Masse-% Gesamtpolymer betragen.

Die Lösungen können in üblicherweise verwendeten Rühr- und Knetvorrichtungen hergestellt werden und sind vollkommen homogen. Die Verformung der Lösung zu einem Formkörper führt man bevorzugt nach dem Trocken-Naßspinnverfahren durch. Die Verarbeitung der Lösung nach einem Naßspinnverfahren ist ebenfalls möglich. Als koagulierende Komponente in dem Fällbad wird bevorzugt Wasser eingesetzt.

Der nach dem erfindungsgemäßen Verfahren hergestellte Formkörper kann als Mittel für die Wasser- und/oder Schwermetallbindung verwendet werden und beispielsweise zur Herstellung von Hygieneprodukten oder technischen, wasserabsorbierenden Produkten dienen. Dem erfindungsgemäß hergestellten Formkörper können ferner bakterizide und/oder fungizide Eigenschaften verliehen werden (Schwermetalle). Zudem hat sich gezeigt, daß Garne, die nach dem erfindungsgemäßen Verfahren aus Cellulose und Stärke hergestellt sind, eine erhöhte enzymatische Abbaugeschwindigkeit im Wiederkäuermagen zeigen und daher verdaulich sind. So wird beispielsweise bei Einsatz von bis zu 10 % Stärke (bezogen auf Cellulose) eine Verdoppelung der enzymatischen Abbaugeschwindigkeit im Wiederkäuermagen erreicht (Verwendung als Erntebindegarn).

Zur näheren Erläuterung werden die Vorbehandlung und die Ermittlung des Gesamtpolymergehalts näher beschrieben.

Enzymatische Vorbehandlung

150 g Fichtensulfitzellstoff werden in einer wäßrigen Enzymdispersion (Cellulase) aufgeschlagen, durch Zugabe von 0,05 normaler Schwefelsäure auf einen pH-Wert von 4,5 eingestellt und unter Rühren auf 45°C erwärmt. Man beläßt die Suspension über 60 Minuten bei dieser Temperatur. Im Anschluß wird auf 75°C erhitzt und die Temperatur über 20 Minuten konstant gehalten. Durch Zentrifugieren trennt man die enzymhaltige Flotte ab und wäscht mehrfach mit entionisiertem Wasser. Die vorbehandelte Cellulose wird abgeschleudert und unter Normaldruck luftgetrocknet.

Hydrothermische Vorbehandlung

150 g Temmingzellstoff werden in Wasser dispergiert. Durch Zugabe von 0,1 normaler Schwefelsäure wird der pH-Wert eingestellt. Die Suspension füllt man in einen Autoklaven und erwärmt unter Rühren auf 130°C. Es wird bei konstanter Temperatur und Drehzahl über 3 Stunden gerührt, danach abgekühlt, der Zellstoff abwechselnd mit entionisiertem Wasser gewaschen und zentrifugiert. Nach 5-maliger Wiederholung schleudert man ab und trocknet luftfeucht.

Ermittlung des Gesamtpolymergehalts

Zur Ermittlung des fällbaren Gesamtpolymergehaltes wird eine definierte Menge der Polysaccharidmischung mittels Zahnradpumpe durch entsprechend geformte Öffnungen einer Düsenplatte gedrückt und in einem wäßrigen Koagulationsbad ausgefällt. Faserkabel, Folien oder Beads werden in einem Zweit- bzw. Drittbad mit entionisiertem Wasser gewaschen und im Falle der Faserkabel bzw. Folien zu Stapeln bzw. zu ca. 10 cm langen Einzelstücken geschnitten. Die Beads werden noch zweimal mit entionisiertem Wasser gewaschen. Abschließend trocknet man die Formkörper bei maximal 45°C im Vakuum bis zur Gewichtskonstanz.

Berechnung des Gesamtpolymergehalts:

$$\text{Gesamtgehalt}_{grav} = \frac{\text{Auswaage in g}}{\text{versponnene Polymerlösungsmenge in g}} \times 100\% = \frac{E}{M\text{-}W} \times 100\%$$

mit

    E = eingesetzte Gesamtmasse an Polysaccharid(derivat)en in g
    M = Gesamtmasse der Mischung zu Beginn in g
    W = Masse des abdestillierten Wassers in g

Die Erfindung wird durch die folgenden Beispiele näher erläutert.

Beispiel 1

100 g eines enzymatisch vorbehandelten Zellstoffs werden mit 100 g Amylomaisstärke vermischt und in 1945 g 60%-iger wäßriger N-Methylmorpholin-N-oxid-Lösung (NMMNO) dispergiert. Das Gemisch wird in einen Laborkneter überführt. Man destilliert bei 85°C und einem Enddruck von 20 mbar 605 ml Wasser ab. Die Homogenität der Lösung wird lichtmikroskopisch kontrolliert. 10 Minuten nach Ende der Destillation lassen sich keinerlei Inhomogenitäten mehr erkennen. Der gravimetrisch bestimmte Gesamtpolymergehalt beträgt 13 %.

Die rückstandsfrei gelöste Polysaccharidmischung wird nach der Filtration und Entlüftung mit einer Zahnradpumpe durch die entsprechend geformten Öffnungen einer Düsenplatte gedrückt. Die durch die Düsenplattenöffnungen austretende Schar von Fäden durchläuft einen Luftspalt, wird in einen von Fällbad (wäßrige Aminoxidlösung) durchströmten Trichter geleitet, in diesem koaguliert und transportiert, mittels Aufwickeleinrichtung abgezogen, gewaschen und getrocknet. Die Prüfung der erhaltenen Fäden auf Reißfestigkeit, Reißdehnung und Wasserrückhaltevermögen (WRV) nach DIN 53814 ergab die in der Tabelle zusammengestellten Ergebnisse.

Beispiel 2

Es wird eine Polysaccharidlösung analog Beispiel 1, jedoch unter Verwendung von nicht vorbehandeltem Zellstoff hergestellt. Die Lösung muß bei gleichen Bedingungen noch 40 Minuten bis zur völligen Auflösung geknetet werden. Der Gesamtpolymergehalt beträgt 13 %. Die Eigenschaften der analog Beispiel 1 hergestellten Fäden sind in der Tabelle angegeben.

Beispiel 3

Die Lösung wird analog Beispiel 2, jedoch bei einer Knetertemperatur von 130'C hergestellt. Nach Ende des Abdestillierens muß noch 20 Minuten bis zur vollständigen Auflösung nachbehandelt werden. Die Viskosität der Lösung geht auf ca. 50 % zurück und es lassen sich nur 10 % Gesamtpolymergehalt ermitteln. Die Eigenschaften der analog Beispiel 1 hergestellten Fäden sind in der Tabelle angegeben.

Beispiel 4

100 g enzymatisch vorbehandelten Zellstoffs werden mit 100 g Amylomaisstärke und 100 g Xanthan vermischt und in 7.240 g 60%-iger wäßriger N-Methylmorpholin-N-oxid-Lösung dispergiert. Dem Gemisch werden analog Beispiel 1 1.540 ml Wasser entzogen. Der gravimetrisch bestimmte Gesamtpolymergehalt beträgt 5%. Die Eigenschaften der analog Beispiel 1 hergestellten Fäden sind in der Tabelle angegeben.

Beispiel 5

100 g hydrothermisch vorbehandelter Zellstoff werden mit 200 g Pektin und 100 g N-Hydroxypropylchitosan (DS = 0,6) vermischt und in 5.145 g 60%-iger wäßriger NMMNO-Lösung dispergiert. Im Laborkneter werden 1.095 ml Wasser abdestilliert. Der gravimetrisch bestimmte Gesamtpolymergehalt beträgt 9 %. Die Eigenschaften der analog Beispiel 1 hergestellten Fäden sind in der Tabelle angegeben.

Beispiel 6

300 g enzymatisch vorbehandelter Zellstoff werden mit 10 g Hyaluronsäure und 90 g N-Carboxymethylchitosan (DS = 0,8) vermischt und in einem Gemisch aus 1020 g 60%-igem wäßrigen NMMNO und 800 g DMSO dispergiert. Von der Mischung werden analog Beispiel 1 220 ml Wasser abdestilliert. Die Mischung enthält 20 % Gesamtpolymer. Die Eigenschaften der analog Beispiel 1 hergestellten Fäden sind in der Tabelle angegeben.

Beispiel 7

300 g hydrothermisch vorbehandelter Zellstoff werden mit 50 g Xanthan, 50 g Guaran und 10 g O-Carboxymethylchitosan (DS = 0,2) gemischt und in einer Mischung aus 1.580 g 60%-igem NMMNO und 4360 g N-Methylpyrrolidon dispergiert. Nach Abdestillieren von 490 ml Wasser analog Beispiel 1 verbleibt in der Lösung ein Gesamtpolymergehalt von 7%. Die Eigenschaften der analog Beispiel 1 hergestellten Fäden sind in der Tabelle angegeben.

Beispiel 8

200 g Hydroxybutylcellulose (DS = 2,5) werden mit 200 g Hydroxypropylstärke (DS = 1,5) und 100 g N-Carboxymethylchitosan (DS = 0,5) gemischt und in 6.525 g ca. 60%-igem NMMNO dispergiert. Nach Abdestillieren von 2.025 ml Wasser (siehe Beispiel 1) verbleibt in der Lösung ein Gesamtpolymergehalt von 10%. Die Eigenschaften der analog Beispiel 1 hergestellten Fäden sind in der Tabelle angegeben.

Tabelle

| Beispiel | Reißfestigkeit mN/tex | Reißdehnung % | WRV % |
|---|---|---|---|
| 1 | 290 | 10 | 185 |
| 2 | 290 | 10 | 180 |

Tabelle   (fortgesetzt)

| Beispiel | Reißfestigkeit mN/tex | Reißdehnung % | WRV % |
|----------|----------------------|---------------|-------|
| 3 | 230 | 7 | 170 |
| 4 | 220 | 8 | 280 |
| 5 | 230 | 8 | 295 |
| 6 | 355 | 13 | 190 |
| 7 | 320 | 11 | 240 |
| 8 | 220 | 8 | 310 |

**Patentansprüche**

1. Verfahren zur Herstellung von Formkörpern aus Polysaccharidmischungen durch Auflösen von Cellulose und eines Zweitpolysaccharids in einem organischen, mit Wasser mischbaren Polysaccharidlösungsmittel, das auch ein Zweitlösungsmittel enthalten kann, Verformen der Lösung unter Druck durch eine Düse zu den Formkörpern und Verfestigung der Formkörper durch Koagulation in einem Fällbad, **dadurch gekennzeichnet, daß** man zur Lösungsbildung Cellulose und/oder wenigstens ein wasserunlösliches Cellulosederivat und als Zweitpolysaccharid wenigstens ein von diesen durch erhöhte Wasserlöslichkeit unterschiedenes, aus Hexosen mit glycosidischer 1,4- und 1,6-Verknüpfung aus der Gruppe von Stärke, Pullulan, Carubin und Guaran oder wenigstens teilweise aus Uronsäure(n) aufgebautes Polysaccharid und/oder Polysaccharidderivat eingesetzt aus der Gruppe von Hyaluronsäure Pektin, Algin, Carageenan und Xanthan, wobei der durchschnittliche Substitutionsgrad des Zweitpolysaccharids in dem Bereich von 0,5 - 2,0 beträgt, daß das Fällbad aus Wasser als koagulierende Komponente oder wäßriger Aminoxid-Lösung gebildet wird und daß Cellulose derivate einen durchschnittlichen Substitutionsgrad (bezogen auf substituierte Hydroxylgruppen der Anhydridoglucoseeinheit) zwischen 0,1 und 3 hat.

2. Verfahren nach Anspruch 1, **dadurch gekennzeichnet, daß** man das Zweitpolysaccharid aus Hexosen mit glycosidischer 1,4- und 1,6-Verknüpfung aus der Gruppe aus Stärke, mit Amylpektinanteil aus $\alpha$-1,4-D-Glucose und $\alpha$-1,6-D-Glucose Verknüpfungen, Pullulan aus $\alpha$-1,4-D-Glucose Verknüpfungen mit Maltotriosebausteinen und $\alpha$-1,6-D-Glucose Verknüpfungen zwischen den Grundbausteinen, Carubin und Guaran aus $\beta$-1,4-verknüpfte D-Mannose mit unterschiedlich häufig $\alpha$-1,6-gebundener D-Galaktose enthält, auswählt.

3. Verfahren nach Anspruch 1, **dadurch gekennzeichnet, daß** man das Zweitpolysaccharid aus der Gruppe bestehend aus Hyaluronsäure, aus dimeren $\beta$-1,3 D-Gluconsäure und 2-Acetamino-2-Deoxyglucose Grundbausteinen, Pektin aus $\alpha$-1,4 verknüpfter D-Galakturonsäure und -Methylestern mit $C_2$ oder $C_3$ verknüpfter Galaktose oder Arabinoseseitenketten, Algin ein Copolymer aus $\alpha$-1,4-L-Guluronsäure, $\beta$-1,4-verknüpfter D-Mannursäure und abwechselnden $\alpha$-1,4 und $\beta$-1,4-Grundbausteinen, Carageenan und Xanthan aus $\beta$-1,4 verknüpfter D-Glucose mit trimeren Seitenketten aus 6-Acetylmannose, D-Glucuronsäure und mit Brenztraubensäure acetalisierter Mannose enthält, auswählt.

4. Verfahren nach einem der Ansprüche 1 bis 3, **dadurch gekennzeichnet, daß** man zur Lösungsbildung als Drittpolysaccharid wenigstens ein Polyglucosamin und/oder Polyglucosaminderivat einsetzt.

5. Verfahren nach Anspruch 4, **dadurch gekennzeichnet, daß** man das Polyglucosamin und/oder Polyglucosaminderivat in partiell abgebauter Form einsetzt.

6. Verfahren nach einem der vorhergehenden Ansprüche, **dadurch gekennzeichnet, daß** man als nicht-cellulosische Komponente(n) zu 1 bis 100 Masse-% Zweitpolysaccharid(derivat) und zu 99 bis 0 Masse-% Drittpolysaccharid einsetzt.

7. Verfahren nach einem der Ansprüche 1 bis 6, **dadurch gekennzeichnet, daß** man als Zweitpolysaccharid ein wasserlösliches -Homopolysaccharid oder Homopolysaccharidderivat einsetzt.

8. Verfahren nach einem der Ansprüche 1 bis 7, **dadurch gekennzeichnet, daß** man als Zweitpolysaccharid ein wasserlösliches Heteropolysaccharid oder Heteropolysaccharidderivat einsetzt.

9. Verfahren nach einem der Ansprüche 4 bis 8, **dadurch gekennzeichnet, daß** man als Drittpolysaccharid Chitin und/oder Chitosan und/oder ein N- und/oder O-hydroxyalkyliertes oder carboxyalkyliertes Chitin und/oder Chitosanderivat einsetzt.

**10.** Verfahren nach einem der Ansprüche 1 bis 9, **dadurch gekennzeichnet, daß** man Cellulosederivate mit einem durchschnittlichen Substitutionsgrad (DS) in dem Bereich von 0,5 bis 2,0 einsetzt.

**11.** Verfahren nach einem der Ansprüche 4 bis 10, **dadurch gekennzeichnet, daß** man Polyglucosaminderivate mit einem durchschnittlichen Substitutionsgrad (DS) in dem Bereich von 0,5 bis 0,8 einsetzt.

**12.** Verfahren nach einem der Ansprüche 1 bis 11, **dadurch gekennzeichnet, daß** man als Polysaccharidlösungsmittel ein N-Methylamin-N-Oxid einsetzt.

**13.** Verfahren nach einem der Ansprüche 1 bis 12, **dadurch gekennzeichnet, daß** man das Zweitlösungsmittel aus der aus Dimethylsulfoxid, N-Methylpyrrolidon und Sulfolan bestehenden Gruppe auswählt.

**14.** Verfahren nach einem der Ansprüche 1 bis 13, **dadurch gekennzeichnet, daß** man eins oder mehrere der eingesetzten Polysaccharide mit 0,1 bis 6,0 Masse-%, bezogen auf Polysaccharid, eines polysaccharidaktiven Enzyms in einem Flottenverhältnis in dem Bereich von 1:2 bis 1:20 bei einem pH-Wert zwischen 3 und 10 und bei einer Temperatur zwischen 20 und 70°C während 0,3 bis 3 Stunden vorbehandelt.

**15.** Verfahren nach einem der Ansprüche 1 bis 14, **dadurch gekennzeichnet, daß** man eins oder mehrere der eingesetzten Polysaccharide in einem Flottenverhältnis in dem Bereich von 1:2 bis 1:20 bei einem pH-Wert zwischen 4 und 9 und bei einer Temperatur zwischen 90 und 180°C während 0,5 bis 5 Stunden hydrothermisch vorbehandelt.

**16.** Verfahren nach einem der Ansprüche 1 bis 15, **dadurch gekennzeichnet, daß** der Gesamtpolymergehalt der homogenen Lösung 5 bis 30 Masse-% beträgt.

**17.** Verfahren nach einem der Ansprüche 1 bis 16, **dadurch gekennzeichnet, daß** man zur Lösungsbildung bei Temperaturen in dem Bereich von 80 bis 130°C arbeitet.

**18.** Verfahren nach einem der Ansprüche 1 bis 17, **dadurch gekennzeichnet, daß** man die Verformung der Lösung zu einem Formkörper nach dem Trocken-Naßspinnverfahren durchführt.

**19.** Verfahren nach einem der Ansprüche 1 bis 18, **dadurch gekennzeichnet, daß** man als koagulierende Komponente in dem Fällbad Wasser einsetzt.

**20.** Verwendung eines Formkörpers der nach einem der Ansprüche 1 bis 19 erhältlich ist, als Mittel für die Wasser- und/oder Schwermetallbindung.

**21.** Verwendung eines Formkörpers der nach einem der Ansprüche 1 bis 19 erhältlich ist, als cellulosische Faser mit bakteriziden und/oder fungiziden Eigenschaften.

**22.** Verwendung des nach dem Verfahren nach Anspruch I hergestellten Formkörpers als Garn mit erhöhter Abbaugeschwindigkeit im Wiederkäuermagen.

**Claims**

**1.** A process for the production of moulded bodies of polysaccharide mixtures by dissolving cellulose and a second polysaccharide in an organic water-miscible polysaccharide solvent which may also contain a second solvent, moulding the solution under pressure through a die to form the moulded bodies and solidifying the moulded bodies by coagulation in a precipitation bath, **characterised in that**, to form the solution, cellulose and/or at least one water-insoluble cellulose derivative and, as second polysaccharide, at least one polysaccharide and/or polysaccharide derivative, which differs from these by increased water solubility and is built up from hexoses with a glycosidic 1,4-linkage and 1,6-linkage from the group of starch, pullulan, locust bean gum and guar gum or at least partially from uronic acid(s) are used belonging to the group of hyaluronic acid, pectin, algin, carrageenan and xanthan, the average degree of substitution of the second polysaccharide being in the region of 0.5 - 2.0, that the precipitation bath is formed of water as coagulation component or aqueous amine oxide solution and the cellulose derivative has an average degree of substitution (based on substituted hydroxyl groups of the anhydridoglucose unit) of between 0.1 and 3.

2. The process according to claim 1 **characterised in that** the second polysaccharide is selected from hexoses with a glycosidic 1,4-linkage and 1,6-linkage from the group of starch with an amyl pectin moiety of $\alpha$-1,4-D glucose and $\alpha$-1,6-D glucose linkages, pullulan of $\alpha$-1,4-D glucose linkages with maltotriose building blocks and $\alpha$-1,6-D glucose contains linkages between the building blocks, locust bean gum and guar gum of $\beta$-1,4-linked D mannose with D-galactose glucose linkages $\alpha$-1,6-bound with different frequency.

3. The process according to claim 1 **characterised in that** the second polysaccharide is selected from the group consisting of hyaluronic acid, from dimeric $\beta$-1,3-D gluconic acid and 2-acetamino-2-deoxyglucose building blocks, pectin from $\alpha$-1,4-linked D-galactonuronic acid and galactonuronic acid methyl esters with $C_2$ or $C_3$-linked galactose or arabinose side chains, algin contains a copolymer from $\alpha$-1,4-L guluronic acid, $\beta$-1,4-linked D mannuric acid and alternately 1,4 and $\beta$-1,4 building blocks, carrageenan and xanthan from $\beta$-1,4 linked D-glucose with trimeric side chains of 6-acetyl mannose, D-glucuronic acid and mannose acetalised with pyruvic acid.

4. The process according to one of claims 1 to 3 **characterised in that**, for the formation of the solution, at least one polyglucosamine and/or polyglucosamine derivative is used as third polysaccharide.

5. The process according to claim 4 **characterised in that** the polyglucosamine and/or polyglucosamine derivative is used in the partially degraded form.

6. The process according to one of the preceding claims **characterised in that**, as non-cellulosic component(s), up to 1 to 100 % by wt. of a second polysaccharide (derivative) and up to 99 to 0 % by wt. of a third polysaccharide are used.

7. The process according to one of claims 1 to 6 **characterised in that**, as second polysaccharide, a water-soluble homopolysaccharide or homopolysaccharide derivative is used.

8. The process according to one of claims 1 to 7 **characterised in that** a water-soluble heteropolysaccharide or heteropolysaccharide derivative is used as second polysaccharide.

9. The process according to one of claims 4 to 8 **characterised in that** chitin or chitosan and/or an N-hydoxyalkylated and/or O-hydroxyalkylated or carboxylated chitin and/or chitosan derivative is used as third polysaccharide.

10. The process according to one of claims 1 to 9 **characterised in that** cellulose derivatives with an average degree of substitution (DS) in the region of 0.5 to 2.0 are used.

11. The process according to one of claims 4 to 10 **characterised in that** polyglucosamine derivatives with an average degree of substitution (DS) in the region of 0.5 to 0.8 is used.

12. The process according to one of claims 1 to 11 **characterised in that** an N-methylamine-N-oxide is used as polysaccharide solvent.

13. The process according to one of claims 1 to 12 **characterised in that** the second solvent is selected from the group consisting of dimethyl sulphoxide, N-methyl pyrrolidone and sulpholane.

14. The process according to one of claims 1 to 13 **characterised in that** one or several of the polysaccharides used are pre-treated with 0.1 to 6.0 % by wt., based on the polysaccharide, of a polysaccharide-active enzyme in a liquor ratio on the region of 1:2 to 1:20 at a pH between 3 and 10 and at a temperature between 20 and 70 °C for 0.3 to 3 hours.

15. The process according to one of claims 1 to 14 **characterised in that** one or several of the polysaccharides used are pre-treated hydrothermally in a liquor ratio on the region of 1:2 to 1:20 at a pH between 4 and 9 and at a temperature between 90 and 180 °C for 0,5 to 5 hours.

16. The process according to one of claims 1 to 15 **characterised in that** the total polymer content of the homogeneous solution is 5 to 30 % by wt.

17. The process according to one of claims 1 to 16 **characterised in that** for the formation of the solution, work is carried out at a temperature in the region of 80 to 130 °C.

18. The process according to one of claims 1 to 17 **characterised in that** the deformation of the solution to form a moulded body is carried out according to the dry-wet spinning method.

19. The process according to one of claims 1 to 18 **characterised in that** water is used as coagulating component in the precipitation bath.

20. A use of a moulded body according to one of claims 1 to 19 as an agent for water binding and/or heavy metal binding.

21. The use of a moulded body obtainable according to one of claims 1 to 19 as cellulosic fibre with bactericidal and/or fungicidal properties.

22. The use of the moulded body produced according to the process of claim 1 as yarn with an increased rate of degradation in a ruminant stomach.


**Revendications**

1. Procédé de fabrication de corps moulés en mélanges de polysaccharides, par dissolution de cellulose et d'un polysaccharide secondaire, dans un solvant de polysaccharide organique miscible à l'eau, qui peut également contenir un solvant secondaire, par mise en forme de la solution sous pression à travers une buse, pour obtenir les corps moulés et par durcissement des corps moulés par coagulation dans un bain de coagulation, **caractérisé en ce que** pour créer la solution on utilise de la cellulose et/ou au moins un dérivé de cellulose non soluble dans l'eau et en tant que polysaccharide secondaire au moins un polysaccharide différent de ces derniers par une solubilité dans l'eau accrue, à partir d'hexoses à liaison glycosidique en 1,4 et 1,6 du groupe des amidons, de pullulane, de caroubine et de guarane ou de polysaccharide et/ou d'un dérivé de polysaccharide constitué au moins partiellement d'acide(s) uronique(s), mis en oeuvre à partir du groupe d'acide hyaluronique pectine, algine, carraghénane et xanthane, le degré moyen de substitution du polysaccharide secondaire se situant dans la fourchette de 0,5 à 2,0, **en ce que** le bain de coagulation est constitué d'eau en tant que composante de coagulation ou d'une solution aqueuse d'oxyde d'amine et **en ce que** les dérivés de cellulose présentent un degré de substitution moyen de 0,1 à 3, par rapport aux groupes hydroxyles des unités de glucose anhydres.

2. Procédé selon la revendication 1, **caractérisé en ce que** l'on sélectionne le polysaccharide secondaire parmi les hexoses à liaison glycosidique en 1,4 et 1,6 parmi le groupe constitué des amidons, avec une fraction en amylopectine issue de liaisons de d-glucose en $\alpha$-1,4 et de d-glucose en $\alpha$-1,6, de pullulane issu de liaisons de d-glucose en $\alpha$-1,4 avec des modules de malto-triose et des liaisons de d-glucose en $\alpha$-1,6 entre les modules de base, de caroubine et de guarane issue de d-mannose à liaison en $\beta$-1,4 avec de la d-galactose à combinaison $\alpha$-1,6 de fréquence différente.

3. Procédé selon la revendication 1, **caractérisé en ce que** l'on sélectionne le polysaccharide secondaire dans le groupe constitué de l'acide hyaluronique, de modules de base de dimères de l'acide d-gluconique en $\beta$-1,3 et de 2-acétamino-$\alpha$-1,6 D deoxy-glucoses, de pectine issue d'acide d-galacturonique et d'esters de méthyle à liaison en $\alpha$-1,4 avec du galactose ou des chaînes latérales d'arabinose à liaison en $C_2$ ou $C_3$, d'algine, un copolymère d'acide 1-guluronique en $\alpha$-1,4, d'acide d-mannurique à liaison en $\beta$-1,4 et alternativement de modules de base en $\alpha$-1, 4 et $\beta$-1, 4, de carraghénane et de xanthane issus de d-glucose à liaison en $\beta$-1, 4, à chaînes latérales trimères de 6-mannose acétyle, d'acide d-glucuronique et avec de l'acide pyruvique de mannose acétylé.

4. Procédé selon l'une quelconque des revendications 1 à 3, **caractérisé en ce que** pour créer la solution, on utilise en tant que polysaccharide tertiaire au moins une polyglucosamine et/ou un dérivé de polyglucosamine.

5. Procédé selon la revendication 4, **caractérisé en ce que** l'on utilise la polyglucosamine et/ou le dérivé de polyglucosamine sous forme partiellement dégradée.

6. Procédé selon l'une quelconque des revendications précédentes, **caractérisé en ce qu'**on utilise en tant que composante(s) non cellulosique(s) de 1 à 100 % en masse d'un (dérivé de) polysaccharide secondaire et de 99 à 0 % en masse d'un polysaccharide tertiaire.

**7.** Procédé selon l'une quelconque des revendications 1 à 6, **caractérisé en ce que** l'on utilise en tant que polysaccharide secondaire un homopolysaccharide soluble ou un dérivé d'homopolysaccharide hydrosoluble.

**8.** Procédé selon l'une quelconque des revendications 1 à 7, **caractérisé en ce qu'**on utilise en tant que polysaccharide secondaire un hétéropolysaccharide soluble ou un dérivé d'hétéropolysaccharide hydrosoluble.

**9.** Procédé selon l'une quelconque des revendications 4 à 8, **caractérisé en ce que** l'on utilise en tant que polysaccharide tertiaire de la chitine et ou du chitosan et/ ou un dérivé n-0 hydroxyalkyle ou carboxyalkyle de chitine et/ ou de chitosan.

**10.** Procédé selon l'une quelconque des revendications 1 à 9, **caractérisé en ce que** l'on utilise des dérivés cellulosiques présentant un degré de substitution moyen (DS) situé dans la fourchette de 0,5 à 2,0.

**11.** Procédé selon l'une quelconque des revendications 4 à 10, **caractérisé en ce que** l'on utilise des dérivés de polyglucosamines présentant un degré de substitution moyen (DS) situé dans la fourchette de 0,5 à 0,8.

**12.** Procédé selon l'une quelconque des revendications 1 à 11, **caractérisé en ce que** l'on utilise en tant que solvant polysaccharide un n-oxyde de n-méthylamine.

**13.** Procédé selon l'une quelconque des revendications 1 à 12, **caractérisé en ce que** l'on sélectionne le solvant secondaire dans le groupe constitué du diméthylsulfoxide, de la pyrrolidone n-méthylique, et du sulfolane.

**14.** Procédé selon l'une quelconque des revendications 1 à 13, **caractérisé en ce que** l'on prétraite un ou plusieurs des polysaccharides utilisés avec de 0,1 à 6,0 % en masse du polysaccharide d'un enzyme polysaccharide actif selon un rapport du bain situé dans la fourchette de 1 : 2 à 1 : 20, pour une valeur pH située entre 3 et 10 et à une température située entre 20 et 70 ° C, pendant de 0,3 à 3 heures.

**15.** Procédé selon l'une quelconque des revendications 1 à 14, **caractérisé en ce que** l'on soumet à un prétraitement hydrothermique un ou plusieurs des polysaccharides utilisés selon un rapport de bain situé dans la fourchette de 1 : 2 à 1 : 20, à une valeur pH située entre 4 et 9 et à une température située entre 90 et 180 °C, pendant de 0,5 à 5 heures.

**16.** Procédé selon l'une quelconque des revendications 1 à 15, **caractérisé en ce que** la teneur totale en polymères de la solution homogène s'élève à de 5 à 30 % en masse.

**17.** Procédé selon l'une quelconque des revendications 1 à 16, **caractérisé en ce que** pour créer la solution, on travaille à des températures situées dans la fourchette entre 80 et 130 °C.

**18.** Procédé selon l'une quelconque des revendications 1 à 17, **caractérisé en ce que** l'on procède à la mise en forme de la solution en un corps moulé, à l'issue du procédé de séchage - de filage au mouillé.

**19.** Procédé selon l'une quelconque des revendications 1 à 18, **caractérisé en ce que** l'on utilise de l'eau en tant que composante de coagulation dans le bain de coagulation.

**20.** Utilisation d'un corps moulé pouvant être obtenu selon l'une quelconque des revendications 1 à 19 en tant que moyen de liaison de l'eau et/ou du métal lourd.

**21.** Utilisation d'un corps moulé pouvant être obtenu selon l'une quelconque des revendications 1 à 19 en tant que fibre cellulosique à caractéristiques bactéricides ou fongicides.

**22.** Utilisation du corps moulé fabriqué selon le procédé selon la revendication 1 en tant que fil à vitesse de décomposition accrue dans l'estomac des ruminants.